# EUROPÄISCHE PATENTSCHRIFT

(11) **EP 2 153 270 B1**
(45) Veröffentlichungstag und Bekanntmachung des Hinweises auf die Patenterteilung: **10.03.2021**
(21) Anmeldenummer: 08748986.0
(22) Anmeldetag: 18.04.2008
(51) Int. Cl.: G02C 5/22

(54) **FEDERSCHARNIER**
SPRING HINGE
CHARNIÈRE À RESSORT

(30) Priorität: 23.05.2007 DE 102007025771; 13.06.2007 DE 102007027153
(43) Veröffentlichungstag der Anmeldung: 17.02.2010
(73) Patentinhaber: OBE Ohnmacht & Baumgärtner GmbH & Co. KG, 75228 Ispringen (DE)
(72) Erfinder: WIENICKE, Frank, 75217 Birkenfeld (DE); WANNENMACHER, Ulrich, 76689 Karlsdorf (DE)
(74) Vertreter: Kordel, Mattias
(86) Internationale Anmeldenummer: PCT/EP2008/003131
(87) Internationale Veröffentlichungsnummer: WO 2008/087050

(56) Entgegenhaltungen:
- EP-A- 0 679 920
- EP-A- 1 335 236
- EP-A- 1 617 276
- WO-A-97/41482
- US-A- 3 567 315

## Beschreibung

Die Erfindung betrifft ein elektroschweißbares Federscharnier gemäß Oberbegriff des Anspruchs 1.

Federscharniere der hier angesprochenen Art sind bekannt. Sie werden als Scharniere für Brillen verwendet und mittels eines Elektroschweißverfahrens an den Brillenbügeln oder dem Mittelteil einer Brille befestigt. Sie umfassen ein Gehäuse, welches an einer Unterseite offen ist und einen Hohlraum aufweist, in dem ein Federelement angeordnet ist. In dem Gehäuse sind außerdem wenigstens ein Stützelement vorgesehen sowie ein Scharnierelement, das in dem Gehäuse verschieblich gelagert ist. Beim Elektroschweißen wird das Federscharnier mit seiner Unterseite fest an ein Brillenelement, beispielsweise an einen Brillenbügel, angedrückt. Der Anpressdruck liegt beispielsweise im Bereich von 70 bis 700 N. Sobald die Anpresskräfte aufgebracht sind, wird ein Schweißstrom von 2.000 A bis 8.000 A über das Gehäuse des Federscharniers und das Brillenelement, also den Brillenbügel oder das Mittelteil einer Brille, geleitet. Im Berührungsbereich zwischen Federscharnier und Brillenbügel sind Schweißwarzen vorgesehen, die sich bei den hohen Stromstärken erwärmen und schmelzen. Auf diese Weise wird eine feste Verbindung zwischen Federscharnier und Brillenelement erzeugt. Derartige elektroschweißbare Federscharniere werden z.B. in den Offenlegungsschriften WO 97/41482 A und EP 0 679 920 A beschrieben.
Die Offenlegungsschrift EP 1 335 236 A beschreibt ein Federscharnier, welches in das Ende eines Brillenbügels integriert ist. Es hat sich herausgestellt, dass bei den hohen Anpresskräften eine Verformung des Gehäuses des Federscharniers eintreten kann, insbesondere des innerhalb des Gehäuses vorgesehenen Hohlraums, der dazu dient, das Federelement, das Scharnierelement und das Stützelement aufzunehmen. Beim Elektroschweißen können auch Materialverlagerungen auftreten, die eine optimale Funktion des Federscharniers beeinträchtigen: Es ist möglich, dass Material in das Innere des Gehäuses, nämlich in den Hohlraum, verlagert wird, sodass dort ein Vorsprung entsteht. Findet eine Verformung des Gehäuses und damit des Hohlraums statt, ergibt sich eine Beeinträchtigung der Beweglichkeit des Scharnierelements gegenüber dem Gehäuse und damit der Funktion des Federscharniers. Derartige Verformungen des Gehäuses treten insbesondere bei kleinen Federscharnieren auf, wie sie mehr und mehr Verwendung finden.

Aufgabe der Erfindung ist es daher, ein Federscharnier der Eingangs genannten Art zu schaffen, das trotz kleinster Abmessungen in einem Elektroschweißverfahren optimal auf einem Brillenelement aufbringbar ist.

Zur Lösung dieser Aufgabe wird ein elektroschweißbares Federscharnier vorgeschlagen, das die in Anspruch 1 genannten Merkmale aufweist. Es zeichnet sich dadurch aus, dass wenigstens ein Stützelement im Wesentlichen zentrisch im Bereich eines offenen Stirnseitenabschnitts des Gehäuses angeordnet ist und ausgehend von einer Bodenfläche des Gehäuses freistehend in den Hohlraum hinein ragt, und dass auf der einem Brillenelement zugewandten Unterseite des Stützelements mindestens eine Schweißwarze zum Elektroverschweißen des Gehäuses mit dem Brillenelement vorgesehen ist. Diese Ausgestaltung eines Federscharniers bietet den Vorteil, dass der Schweißstrom direkt im Bereich des Stützelements in das Gehäuse eingeleitet wird, ohne dass andere Bereiche des Gehäuses von dem Schweißstrom durchlaufen werden, sodass also durch die freistehende Anordnung des Stützelements, welches die Schweißwarze aufweist, eine thermische Entkopplung stattfindet. Dadurch, dass sich das Stützelement in den Hohlraum des Gehäuses erstreckt, ohne das angrenzende Gehäuse zu berühren, ist eine definierte Führung des Schweißstroms gezielt zu der Schweißwarze derart möglich, sodass eine Verformung oder eine Verlagerung des Materials des Gehäuses wirksam vermieden wird. Das Stützelement kann durch die vorteilhafte zentrische und in dem Hohlraum von dem Gehäuse isolierte Anordnung im Bereich des offenen Stirnseitenabschnitts die eingeleiteten Anpresskräfte während des Schweißprozesses außerdem besonders wirksam abfangen. Gleichzeitig wird, wie gesagt, durch das Stützelement ein optimaler Stromfluss gewährleistet, sodass andere Bereiche des Gehäuses gar nicht oder allenfalls von einem kleinen Anteil des Schweißstroms durchflossen und eine Überhitzung und eine Beeinträchtigung, insbesondere dünner Gehäusebereiche und des Federelements, vermieden werden. Es ist somit möglich, das Federscharnier als vollständig vormontierte Baugruppe bestehend aus Gehäuse, Federelement und Scharnierteil auf ein Brillenelement aufzuschweißen.

Bevorzugt wird ein elektroschweißbares Federscharnier, das sich dadurch auszeichnet, dass das Stützelement einstückig mit dem Gehäuse ausgebildet ist. Durch diese Ausgestaltung baut das Federscharnier besonders kompakt, und die Herstellung des Federscharniers wird dadurch besonders einfach und kostengünstig.

Weiterhin bevorzugt wird ein elektroschweißbares Federscharnier, das sich dadurch auszeichnet, dass das Stützelement gleichzeitig als Verschlussteil für das Gehäuse dient. Durch diese vorteilhafte Ausgestaltung des Stützelements ist kein zusätzliches Verschlusselement für das Federscharnier notwendig, sodass eine besonders kompakte und kostengünstige Bauweise des Federscharniers realisierbar ist.

Bei einem weiteren elektroschweißbaren Federscharnier schließt die Unterseite des Stützelements bündig mit der Unterseite des Gehäuses des Federscharniers ab. Die Schweißwarze, welche an dem Stützelement angebracht ist und welche über die Unterseite des Stützelements hinausragt, ragt somit auch über die Unterseite des Gehäuses hinaus. Beim Elektroschweißen wird die überstehende Schweißwarze, wie oben beschrieben, auf das Brillenelement angepresst. Dadurch, dass die Unterseite des Stützelements im Wesentlichen bündig mit der Unterseite des Gehäuses abschließt, wenn die Schweißwarze geschmolzen ist, ergibt sich ein besonders stabiles Federscharnier.

Ein weiteres bevorzugtes elektroschweißbares Federscharnier umfasst wenigstens ein weiteres mindestens eine Schweißwarze aufweisendes Stützelement. Auch das weitere Stützelement ist dabei vorzugsweise einstückig mit dem Gehäuse ausgebildet. Durch die Verwendung von zwei jeweils Schweißwarzen aufweisenden Stützelementen wird einerseits der Anpressdruck während des Elektroschweißens besser verteilt, andererseits ist dadurch auch ein besserer Halt des Gehäuses an dem Brillenelement nach dem Verschweißen gegeben.

Das erfindungsgemäße elektroschweißbare Federscharnier zeichnet sich dadurch aus, dass das Stützelement im Bereich des offenen Stirnseitenabschnitts als Widerlager für das Federelement dient und im Bereich des offenen Stirnseitenabschnitts des Federscharniers ein Abrollelement vorgesehen ist, welches mit dem Stützelement verbindbar ist. Durch diese vorteilhafte Ausgestaltung ist ein zusätzliches Widerlager nicht notwendig, sodass das Federscharnier besonders kurz baut und durch das Stützelement zusätzlich eine hohe Stabilität aufweist. Die Funktion des Stützelements als Widerlager für das Federelement trägt im Übrigen zur einfachen Montage des Gehäuses als vormontierte Baugruppe an einem Brillenelement bei.

Bei einem weiteren bevorzugten elektroschweißbaren Federscharnier ist zwischen dem Gehäuse und dem Stützelement auf beiden Seiten einer Mittelebene des Federscharniers jeweils ein Schlitz vorgesehen, in dem das Scharnierelement anordenbar ist. Insbesondere bei einer vorteilhaften U-förmigen Ausgestaltung des Scharnierelements dienen die Schlitze dann als Führungsschlitze. Dadurch reduziert sich wiederum die Baugröße des Federscharniers, da keine zusätzliche Führungseinrichtung für das Scharnierelement in dem Gehäuse vorgesehen sein muss.

Ein weiteres bevorzugtes elektroschweißbares Federscharnier zeichnet sich dadurch aus, dass das Scharnierelement zwei, jeweils ein Scharnierauge umfassende Stege aufweist. Insbesondere steht das Scharnierelement über die zwei Stege mit einem drei-rolligen Scharnierelement in Verbindung. Bei Verwendung eines drei-rolligen Scharnierelements wird insbesondere das Gesamtspiel des in dem Gehäuse des Federscharniers angeordneten Scharnierelements minimiert, da jeweils ein Steg des einen Scharnierteils von zwei Rollen des anderen Scharnierteils umgeben ist. Unter Gesamtspiel ist dabei das Spiel des Scharnierelements in drei Dimensionen, nämlich einerseits durch die Lagerung im Gehäuse des Federscharniers und andererseits durch die Befestigung an dem Scharnierteil zu verstehen. Aus dieser Ausgestaltung ergibt sich eine besonders hohe Stabilität des Federscharniers.

Außerdem wird ein elektroschweißbares Federscharnier bevorzugt, bei dem das Stützelement eine Abrollfläche für einen Nocken eines Scharnierelements aufweist. Bei der Verlagerung eines Brillenbügels in eine Schließposition oder in eine Trageposition, kann sich der Nocken des Scharnierelements an der Abrollfläche des Stützelements abstützen.

Auch wird ein elektroschweißbares Federscharnier bevorzugt, das sich dadurch auszeichnet, dass das Scharnier als Stanzteil ausgeführt ist, welches nach dem Stanzen in eine U-Form gebogen wird. Vorzugsweise handelt es sich bei dem verwendeten Material um ein Material konstanter Dicke, welches zudem eine hohe Festigkeit aufweist und vorzugsweise rostfrei ausgeführt ist. Dadurch ist eine besonders einfache und kostengünstige Realisierung des im Gehäuse befindlichen Scharnierelements möglich.

Weitere vorteilhafte Ausgestaltungen der Erfindung ergeben sich aus den Unteransprüchen.

Die Erfindung wird im Folgenden anhand der Zeichnung näher erläutert. Es zeigen:
- Figur 1: eine perspektivische Darstellung eines vormontierten Federscharniers;
- Figur 2: eine Unteransicht auf ein vormontiertes Federscharnier;
- Figur 3: eine Draufsicht auf ein Federscharnier;
- Figur 4: einen Längsschnitt durch das Federscharnier gemäß Figur 3 entlang der Schnittlinie A-A ;
- Figur 5: eine perspektivische Darstellung des Gehäuses eines Federscharniers;
- Figur 6: eine perspektivische Draufsicht auf ein Federscharnier;
- Figur 7: eine perspektivische Darstellung eines zum Teil geschnittenen Scharnierteils;
- Figur 8: eine Schnittdarstellung des Scharnierelements gemäß Figur 7;
- Figur 9: eine perspektivische Darstellung einer Ausführungsform des Federscharniers;
- Figur 10: eine Unteransicht des Federscharniers gemäß Figur 9;
- Figur 11: eine Stirnseitenansicht des Federscharniers gemäß Figur 9;
- Figur 12: eine perspektivische Darstellung einer weiteren Ausführungsform des Federscharniers;
- Figur 13: eine perspektivische Darstellung einer weiteren Ausführungsform des Federscharniers;
- Figur 14: eine perspektivische Darstellung des Federscharniers gemäß Figur 12;
- Figur 15: eine Draufsicht auf das Federscharnier gemäß Figur 14;
- Figur 16: eine perspektivische Darstellung einer weiteren Ausführungsform des Federscharniers, und
- Figur 17: eine Draufsicht auf das Federscharnier gemäß Figur 16.

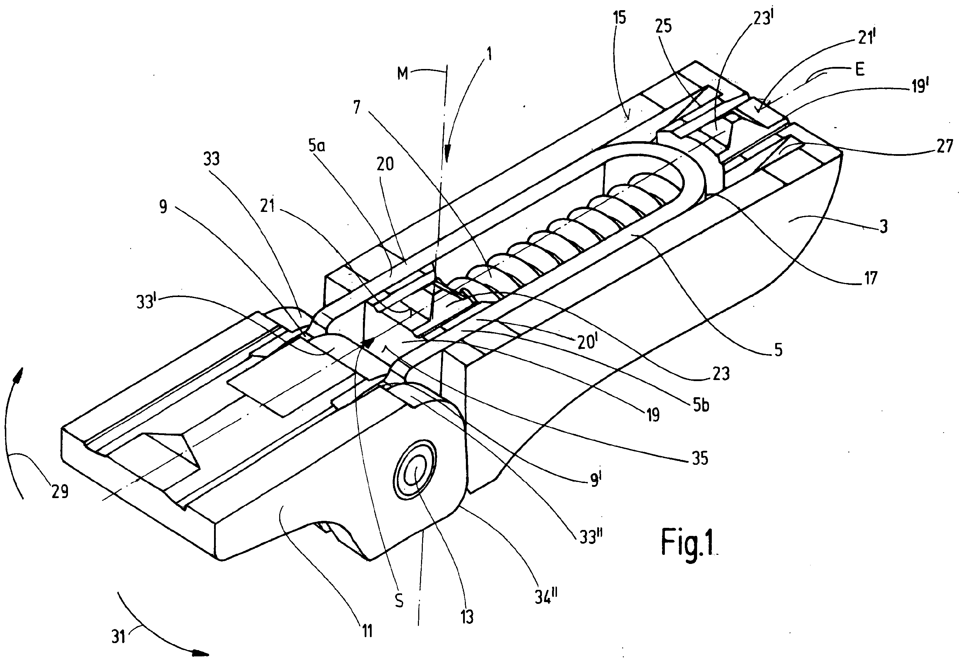

Figur 1 zeigt eine perspektivische Darstellung eines vormontierten Federscharniers 1 für Brillen mit einem Gehäuse 3, einem Scharnierelement 5 und einem Federelement 7. Das Federscharnier 1 ist über Stege 9 und 9' des Scharnierelements 5 mit einem zugehörigen Scharnierteil 11 verbunden. Die Befestigung des Scharnierelements 5 an dem Scharnierteil 11 erfolgt dabei über ein hier nur angedeutetes Verbindungselement 13.

Bei dem Scharnierelement 5 handelt es sich vorzugsweise um ein Stanzteil, welches U-förmig ausgebildet ist. Vorzugsweise ist es aus einem Material konstanter Dicke gefertigt, welches zudem eine mittlere bis hohe Festigkeit aufweist und vorzugsweise rostfrei ist. Die U-Form des Scharnierelements 5 verleiht dem Federscharnier 1 Stabilität, sodass insbesondere auch breitere Brillenbügel mit dem Federscharnier 1 zusammenwirken können. In diesem Fall kann das Federscharnier 1 so ausgebildet sein, dass die Arme des Scharnierelements 5 weiter auseinander liegen. Durch die U-Form ist das Scharnierelement 5 quasi federnd ausgeführt und passt sich auf diese Weise optimal an die Beschaffenheit des Federscharniers 1 an. Zudem kann das Scharnierelement 5 durch die U-förmige Ausgestaltung doppelt geführt werden, sodass ein Wackelspiel des Scharnierelements 5 ausgeglichen, insbesondere reduziert wird.

Figur 1 macht deutlich, dass das Federscharnier 1 eine Unterseite 15 aufweist, zu der das Gehäuse 3 des Federscharniers 1 hin offen ist. Mit dieser Unterseite 15 liegt das Federscharnier 1 im montierten Zustand auf einem hier nicht dargestellten Brillenelement, einem Brillenbügel oder einem Mittelteil, auf. Das Gehäuse 3 weist außerdem einen Hohlraum 17 auf, in dem das Scharnierelement 5 sowie das Federelement 7 angeordnet sind.

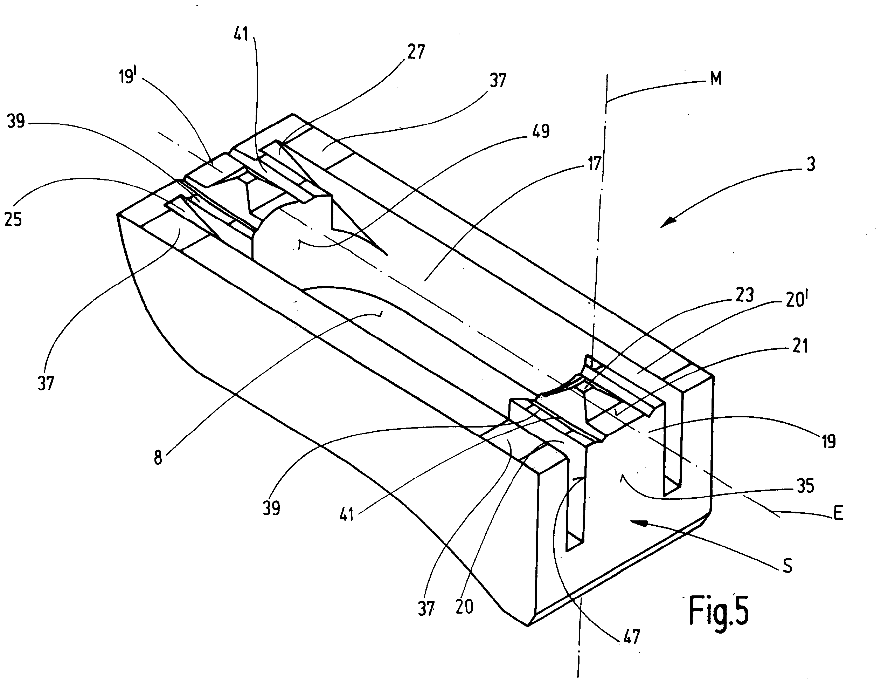

Ebenfalls in dem Hohlraum 17 angeordnet ist ein Stützelement 19, welches im Bereich eines offenen Stirnseitenabschnitts S des Gehäuses 3 vorgesehen ist und sich ausgehend von einer in Figur 5 erkennbaren Bodenfläche B des Gehäuses 3 freistehend in den Hohlraum 17 hinein erstreckt, also das Gehäuse 3 nur im Bereich der Bodenfläche B berührt. Im Bereich des offenen Stirnseitenabschnitts S ist das Stützelement 19 zentrisch angeordnet, das heißt, dass eine Mittelachse M des Stützelements 19 in einer Mittelebene E, die in Längsrichtung gesehen in der Mitte des Federscharniers 1 verläuft, liegt oder zumindest in deren näherer Umgebung angeordnet ist. Die Unterseite 21 des Stützelements 19 schließt, wie in Figur 1 gezeigt, vorzugsweise bündig mit der Unterseite 15 des Gehäuses 3 ab. Auf der Unterseite 21 des Stützelements 19 ist eine Schweißwarze 23 vorgesehen, die zum Elektroverschweißen des Gehäuses 3 mit einem hier nicht dargestellten Brillenelement, wie beispielsweise einem Brillenbügel oder einem Mittelteil einer Brille, dient. Es können auch mehrere Schweißwarzen 23 auf dem Stützelement 19, beispielsweise nebeneinander, angeordnet sein.

Zwischen dem Gehäuse 3 und dem Stützelement 19 ist auf beiden Seiten der Mittelebene E des Federscharniers 1 jeweils ein Schlitz 20 und 20' vorgesehen, in denen das Scharnierelement 5 geführt werden kann. Die Schlitze 20 und 20' sind vorzugsweise symmetrisch zu der Mittelebene E angeordnet und resultieren aus der freistehenden Anordnung des Stützelements 19. Auf diese Weise erfüllen die Schlitze 20, 20' mehrere Funktionen, nämlich zum einen die Führung des Scharnierelements 5 in dem Gehäuse 3 und zum anderen eine thermische Entkopplung des Stützelements 19 von dem Gehäuse 3. Die Schlitze 20 und 20' erstrecken sich auf beiden Seiten des Stützelements 19 bezüglich der Mittelebene E vorzugsweise von der Unterseite 15 des Gehäuses 3 bis zu der nicht erkennbaren Bodenfläche des Gehäuses 3. Auf diese Weise wird die freistehende Anordnung des Stützelements 19 in dem Hohlraum 17 erreicht.

Ein Schweißstrom kann somit in den Bereich des Gehäuses 3, der die Mittelachse M des Stützelements 19 schneidet, eingeleitet werden und, ohne andere Gehäusebereiche zu durchlaufen, direkt in das Stützelement 19 und in die Schweißwarze 23 eingeleitet werden. Auch die Anpresskraft beim Schweißvorgang konzentriert sich hierbei ausschließlich auf den Bereich um die Mittelachse M des Stützelements 19 herum.

Die zentrische, freistehende Anordnung des Stützelements 19 mit der Schweißwarze 23 resultiert damit in einer optimalen Kraftverteilung beim Schweißen des Federscharniers 1 mit einem nicht dargestellten Brillenelement und bietet darüber hinaus den Vorteil, dass eine thermischen Entkopplung während des Schweißens stattfindet, da der Schweißstrom durch die räumliche Trennung des Stützelements 19 mit der Schweißwarze 23 von dem Gehäuse 3 ausschließlich in dem Stützelement 19 fließen kann.

Durch die Schlitze 20 und 20' ist das Stützelement 19 mit der Schweißwarze 23 derart von dem restlichen Gehäuse 3 abgekoppelt, dass die Wärme durch den Stromfluss beim Schweißen definiert im Bereich des Stützelements 19 erzeugt wird.

Wie oben bereits erläutert wurde, erfüllen die Schlitze 20 und 20' somit in vorteilhafter Weise nicht nur eine Führungsfunktion für das Scharnierelement 5, sondern sie sorgen gleichzeitig für eine thermische Entkopplung, sodass ein definierter Stromfluss ausschließlich in dem Stützelement 19 und der Schweißwarze 23 beim Verschweißen des Federscharniers 1 mit einem Brillenelement stattfindet.

In dem dem offenen Stirnseitenabschnitt S gegenüberliegenden Bereich des Gehäuses 3 ist hier ein weiteres Stützelement 19' vorgesehen, welches auf seiner Unterseite 21' ebenfalls vorzugsweise eine Schweißwarze 23' aufweist. Es können auch mehrere Schweißwarzen 23' auf dem Stützelement 19', beispielsweise nebeneinander, angeordnet sein. Neben dem Stützelement 19' sind Aussparungen 25 und 27 erkennbar, die entsprechend den Schlitzen 20 und 20' das Stützelement 19' thermisch von den angrenzenden Bereichen des Gehäuses 3 trennen, um einen definierten Stromfluss in dem Stützelement 19' zu gewährleisten. Die Aussparungen 25 und 27 sind jedoch im Gegensatz zu den Schlitzen 20 und 20' nicht notwendigerweise in das Gehäuse 3 eingebracht, sondern resultieren vielmehr aus der Herstellung des Gehäuses 3, welches beispielsweise gefräst, im Spritzguss- oder im metal injection molding (MIM)-Verfahren hergestellt werden kann.

Das Federscharnier 1 weist hier also lediglich zwei Schweißwarzen 23 und 23' auf, die jeweils einem Stützelement 19 und 19' zugeordnet sind und die in Längsrichtung des Federscharniers 1 gesehen, versetzt zueinander angeordnet sind. Vorzugsweise sind die Schweißwarzen 23, 23' und die Stützelemente 19, 19', wie hier dargestellt ist, im Bereich der Mittelebene E angeordnet, welche das Federscharnier 1 entlang seiner Längsachse in der Mitte schneidet. Durch die geringe Anzahl an Schweißwarzen ist eine besonders schonende Befestigung des Federscharniers 1 an einem Brillenelement möglich, da eine Stromführung noch gezielter erfolgen kann, aufgrund dessen, dass die Schweißwarze 23 insbesondere an Wandbereiche des Gehäuses 3 nicht unmittelbar angrenzt.

Durch die zentrische Anordnung der Stützelemente 19 und 19' mit den Schweißwarzen 23 und 23' kann beim Elektroschweißen eine optimale Krafteinleitung in das Federscharnier 1 erfolgen, sodass ausschließlich der Bereich der Stützelemente 19, 19' mit Kraft beaufschlagt wird und das übrige Gehäuse 3 keine oder nur eine unwesentliche Kraftbeaufschlagung erfährt.

Außerdem bietet die zentrische Anordnung des Stützelements 19 und der Schweißwarze 23 den Vorteil, dass eine Verformung des Führungsbereichs für das Scharnierelement 5, also beispielsweise eine Änderung der Breite der Schlitze 20 und 20', nahezu ausgeschlossen ist, da auf den Randbereich des Gehäuses 3 keine Kraft ausgeübt wird, die zu einer Verformung führen könnte. Im Gegensatz dazu kann es bei herkömmlichen Federscharnieren, bei denen Schweißwarzen im äußeren Bereich des Gehäuses 3 angeordnet sind, zu einer Verengung des Führungsbereichs kommen, wodurch sich das Scharnierelement 5 in dem Gehäuse 3 verklemmen kann und die Funktionsweise des Federscharniers 1 damit beeinträchtigt ist. Bei dem hier vorgeschlagenen Federscharnier 1 wird ein Klemmen des Scharnierelements 5 durch die vorteilhafte Anordnung der Schweißwarze 23 gänzlich vermieden.

Das Scharnierelement 5 ist vorzugsweise als Stanzteil ausgeführt, wird also aus einem ebenen Teil herausgestanzt und anschließend in eine U-Form gebogen, welche aus Figur 1 hervorgeht. Das Scharnierelement 5 wird außerdem an hier nicht erkennbaren Führungsflächen des Stützelements 19 vorbeigeführt, worauf später noch näher eingegangen wird.

Bei der in Figur 1 dargestellten Stellung des Federscharniers 1 ist das Scharnierelement 5 maximal weit in den Hohlraum 17 des Gehäuses 3 hineinverlagert. Das Federelement 7, welches hier als Schraubenfeder ausgebildet ist, stützt sich einerseits an dem Stützelement 19, andererseits innen am Scharnierelement 5 ab und drückt durch seine Federkraft das Scharnierelement 5 in das Gehäuse 3 hinein.

Wird das Scharnierteil 11, welches beispielsweise an einem hier nicht dargestellten Brillenbügel einer Brille befestigt ist, in Richtung des Pfeils 29 um die Mittelachse des Verbindungselements 13 im Uhrzeigersinn verschwenkt, so wird das Scharnierelement 5 gegen die Kraft des Federelements 7 aus dem Gehäuse 3 entlang der hier nicht erkennbaren Führungsflächen des Stützelements 19 verlagert. Das Federscharnier 1 ermöglicht es also, einen Brillenbügel über die normale Tragestellung hinaus zu verschwenken, sodass beispielsweise das Aufsetzen einer Brille für einen Brillenträger erleichtert wird und die Brillenbügel gegen den Kopf des Benutzers angedrückt werden.

Bei einer Bewegung des Scharnierteils 11 in eine durch den Pfeil 31 gekennzeichnete Richtung, wird der Brillenbügel einer Brille in eine Schließposition verlagert, beispielsweise wenn die Brille in einem Etui aufbewahrt werden soll. In diesem Fall stützen sich Lappen 33, 33' und 33" des Scharnierteils 11 an dem Gehäuse 3 ab. Das Scharnierteil 11 ist hier als drei-rolliges Scharnierelement ausgeführt, welches also drei Lappen 33, 33', 33" aufweist. Jeder Lappen weist einen auch als Nase bezeichneten Nocken auf. Hier in Figur 1 ist der Nocken 34" des Lappens 33" erkennbar. Denkbar ist aber auch die Verwendung eines ein-rolligen Scharnierelements mit einem Lappen. Aus Gründen der Verdrehspielminimierung des Scharnierelements 5 kommt allerdings bevorzugt ein drei-rolliges Scharnierteil 11 zum Einsatz. Dadurch, dass jeweils ein Arm 5a, 5b des U-förmigen Scharnierteils 5 zwischen der Innenseite des Hohlraums 17 und den als Führungsfläche dienenden Seitenflächen des Stützelements 19 geführt wird, wird das Scharnierteil 11 stabilisiert und es ergibt sich ein minimales Gesamtspiel des Federscharniers 1. Unter Gesamtspiel ist dabei das Spiel des Scharnierelements in drei Dimensionen, nämlich einerseits durch die Lagerung im Gehäuse des Federscharniers und andererseits durch die Befestigung an dem Scharnierteil zu verstehen.

Aus Figur 1 wird also auch deutlich, dass das Stützelement 19 nicht nur zum gezielten Einleiten eines Schweißstroms in die Schweißwarze 23, zum thermischen Entkoppeln des Stützelements 19 von dem übrigen Gehäuse 3 durch die Schlitze 20 und 20' und zum Auffangen der Anpresskräfte während des Elektroschweißens dient, sondern auch eine Abrollfläche 35 aufweist, an der der Nocken des Lappens 33' des Scharnierteils 11 abrollen kann, wenn beispielsweise das Scharnierteil 11 entlang des Pfeils 31 in seine Schließposition verlagert wird. Der hier nicht sichtbare Nocken des Lappens 33 und der Nocken 34" des Lappens 33" rollen auf der Stirnfläche des Gehäuses 3 ab.

Wie oben bereits erwähnt, bietet das Stützelement 19 außerdem den Vorteil, dass kein zusätzliches Widerlager für das Federelement 7 vorgesehen sein muss, da sich das Federelement 7 an dem Stützelement 19 abstützen kann.

Die in Figur 1 dargestellte Ausgestaltung eines Federscharniers ermöglicht eine besonders kostengünstige Herstellung eines Federscharniers 1, welches als vormontierte Baugruppe bestehend aus drei Elementen auf ein Brillenelement elektrogeschweißt werden kann. Es wird also deutlich, dass das hier vorgeschlagene Federscharnier 1 durch die Kombination eines Gehäuses 3, eines Federelements 7 sowie eines Scharnierelements 5 ohne zusätzliche Elemente realisiert werden kann.

Die Führung des Scharnierelements 5, das Widerlager für das Federelement 7, die Abrollfläche 35 für den Lappen 33' sowie das Verschlusselement für das Federscharnier 1 werden dabei durch das Stützelement 19 realisiert. Dadurch ist eine erhebliche Einsparung von Bauraum möglich, sodass ein besonders kompaktes und stabiles Federscharnier 1 kostengünstig realisierbar ist.

Gleichzeitig leitet das Stützelement 19 den Schweißstrom gezielt zu der Schweißwarze 23, sodass andere Elemente wie beispielsweise das Federelement 7 während des Elektroschweißens keinen Schaden durch den hohen Schweißstrom davontragen. Das wenigstens eine Stützelement 19 verhindert außerdem, dass es während des Elektroschweißens, was mit einem erheblichen Anpressdruck auf das Federscharnier 1 verbunden ist, zu Deformationen des Gehäuses 3 oder anderen Elementen des Federscharniers 1 kommt.

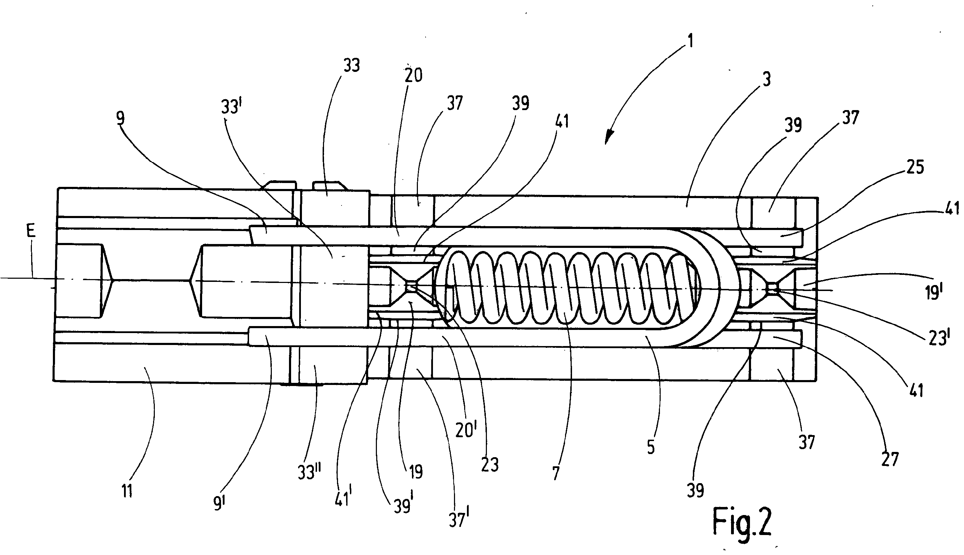

Figur 2 zeigt eine Unteransicht eines vormontierten Federscharniers, also eines Federscharniers 1, bei dem das Scharnierelement 5 und das Federelement 7 in das Gehäuse 3 eingebracht sind, sodass das Federscharnier 1 in diesem vormontierten Zustand auf ein Brillenelement wie beispielsweise ein Mittelteil einer Brille oder einen Brillenbügel aufgesetzt und unter Anpressdruck elektroverschweißt werden kann.

Es wird noch einmal deutlich, dass die Schweißwarzen 23, 23' zentrisch, also im Bereich der Mittelebene E angeordnet sind, die hier senkrecht zur Zeichenebene verläuft.

Figur 2 zeigt außerdem deutlich die Stege 9 und 9' des Scharnierelements 5, die sich über die Stirnfläche des Gehäuses 3 des Federscharniers 1 hinaus erstrecken und in Freiräumen zwischen Lappen 33, 33' und 33" eines Scharnierteils 11 angeordnet werden. Jeweils ein Steg 9, 9' des Scharnierelements 5 ist also von dem Scharnierteil 11 umgeben, was zu einer besonders stabilen Lagerung des Scharnierelements 5 in dem Federscharnier 1 führt. Auch dies reduziert das Gesamtspiel.

Das Federelement 7 stützt sich, in der Regel unter Vorspannung, einerseits an dem Stützelement 19 ab und andererseits innen an dem Scharnierelement 5. Das Stützelement 19 dient somit als Widerlager für das Federelement 7 und presst das Scharnierelement 5 mit seiner Federkraft in das Gehäuse 3.

In Figur 2 erkennbar sind auch Vertiefungen 37 und 37' im Gehäuse 3 sowie Vertiefungen 39 und 39' in den Stützelementen 19 und 19'. Außerdem sind Nuten 41 und 41' in den Stützelementen 19 und 19' vorgesehen. Diese Vertiefungen 37, 37', 39, 39' und Nuten 41, 41', die auch als Ausgleichsrillen bezeichnet werden, dienen dazu, das Material der durch den Schweißstrom geschmolzenen Schweißwarzen 23 und 23' aufzunehmen, sodass das Federscharnier 1 nach dem Elektroschweißen dicht an einem Brillenelement anliegen kann, ohne dass das geschmolzene Material für einen Abstand oder für Unebenheiten zwischen dem Federscharnier 1 und dem Brillenelement sorgt. Die neben der Schweißwarze 23 angeordneten Nuten 41 und 41' dienen vor allem dazu, einen Schweißmittelfluss in die Schlitze 20 und 20' zu verhindern, sodass in diesem Bereich nach dem Schweißen eine einwandfreie Führung des Scharnierelements 5 gewährleistet ist.

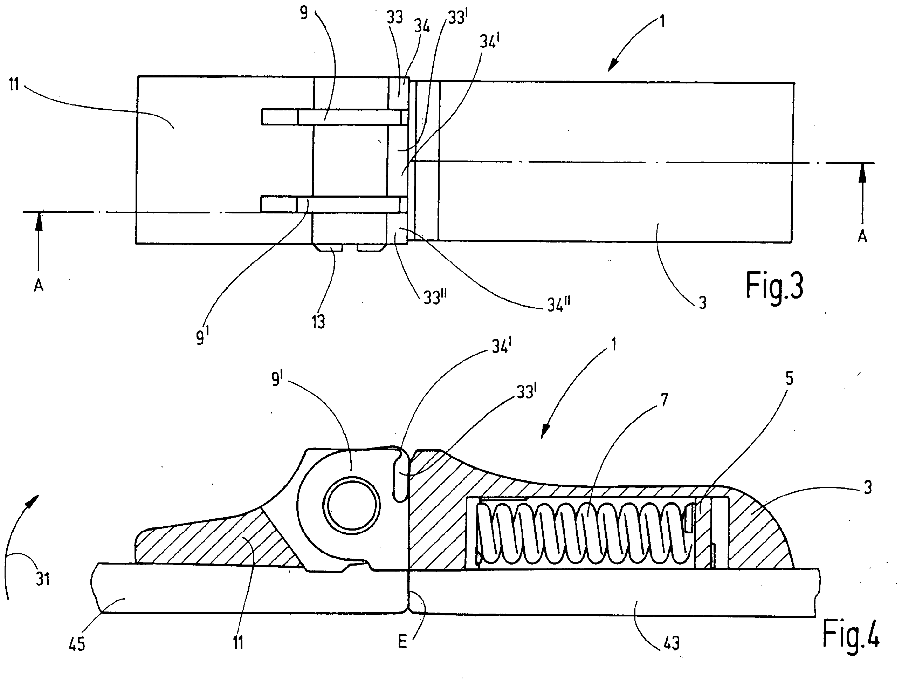

Figur 3 zeigt eine Draufsicht auf das Federscharnier 1. Gleiche Teile sind mit gleichen Bezugszeichen versehen, sodass insofern auf die Beschreibung zu den vorangegangenen Figuren verwiesen wird.

Wiederum ist das Gehäuse 3 des Federscharniers 1 erkennbar, welches über die Stege 9, 9' des in dem Gehäuse 3 angeordneten Scharnierelements 5 mit dem Scharnierteil 11 in Verbindung steht. Während des Elektroschweißens wird ein Anpressdruck auf das Federscharnier 1 ausgeübt. Gemäß der vorliegenden Erfindung wird dabei der Schweißstrom insbesondere an den Stellen in das Gehäuse eingeleitet, an denen sich die Stützelemente 19, 19' befinden. Auch erkennbar sind die Lappen 33, 33' und 33" sowie deren zugehörige Nocken 34, 34' und 34".

Figur 4 zeigt einen Längsschnitt durch das Federscharnier 1 entlang der Schnittlinie A-A gemäß Figur 3.

In Figur 4 ist das Federscharnier 1 in geöffnetem Zustand dargestellt, die Brillenbügel befinden sich also mit anderen Worten in Tragestellung. Dabei kann das Gehäuse 3 des Federscharniers 1 rein beispielhaft an einem Brillenbügel 43 angebracht sein und das Scharnierteil 11 an einem Mittelteil 45 einer Brille. Auch ist es denkbar, das Gehäuse 3 an einem Mittelteil 45 einer Brille anzubringen.

Figur 4 macht im Übrigen deutlich, dass, wenn das Scharnierteil 11 in Richtung des Pfeils 31 bewegt wird, sich der Nocken 34' des Lappens 33' an dem Stützelement 19 abstützt, solange, bis das Scharnierteil 11 in seiner in Figur 4 dargestellten ersten aufgeklappten Position angekommen ist, in der der Brillenbügel mit seinem Ende E an dem Mittelteil der Brille anliegt.

Figur 5 zeigt eine perspektivische Darstellung des Gehäuses 3 des Federscharniers 1. Gleiche Teile sind mit gleichen Bezugszeichen versehen, sodass insofern auf die Beschreibung der vorangegangenen Figuren verwiesen wird.

Bei dem in Figur 5 dargestellten Gehäuse 3 des Federscharniers 1 sind die Stützelemente 19 und 19' in vorteilhafter Weise einstückig mit dem Gehäuse 3 ausgebildet. Dies vereinfacht den Herstellungsprozess des Gehäuses 3 und sorgt außerdem für eine einfache Montage des Federscharniers 1. Auch trägt die einstückige Ausbildung des Stützelements 19 mit dem Gehäuse 3 zur verbesserten Stabilität des Federscharniers 1 bei.

Es ist in Figur 5 deutlich erkennbar, dass das Stützelement 19 zentrisch im Bereich des offenen Stirnseitenabschnitts S angeordnet ist und sich ausgehend von der Bodenfläche B freistehend in den Hohlraum 17 erstreckt.

Das Stützelement 19 weist auf beiden Seiten Führungsflächen 47 auf. Im vormontierten und im verschweißten Zustand des Federscharniers 1 ist das Scharnierelement 5 an den Führungsflächen 47 des Stützelements 19 gleitend gelagert. Das Scharnierelement 5 kann also an den Führungsflächen 47 entlanglaufen, beispielsweise wenn der Brillenbügel über seine normale Tragestellung hinaus verlagert wird. Der stirnseitige Eingang des Federscharniers 1 bleibt dabei durch das Stützelement 19 verschlossen. Das Stützelement 19 erfüllt also auch die Funktion eines Verschlusselements, das verhindert, dass Schmutz in das Gehäuse 3 des Federscharniers 1 eindringt und so die Funktionsfähigkeit des Federscharniers 1 beeinträchtigt wird.

Figur 5 macht noch deutlich, dass die Innenkontur 49 des Gehäuses 3 im Bereich des Stützelements 19' derart abgerundet ist, sodass eine Verlagerung des U-förmigen Scharnierelements 5 in das Gehäuse 3 möglich ist. Die Eindringtiefe des Scharnierteils 5 in das Gehäuse 3 wird begrenzt durch die Stege 9 und 9', die durch die Federkraft des Federelements 7 außen an dem Gehäuse 3 anschlagen.

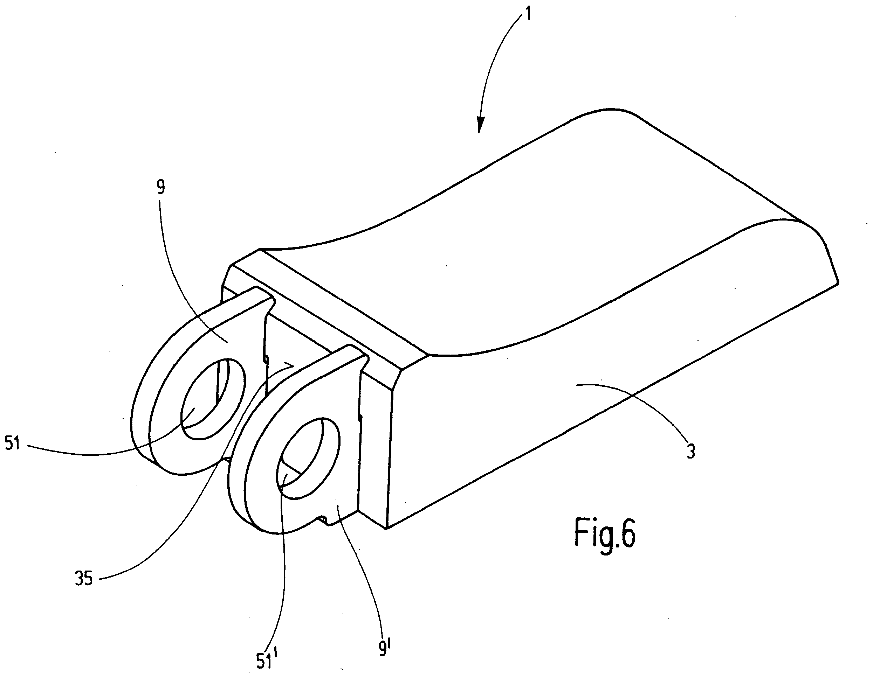

Figur 6 zeigt eine perspektivische Draufsicht auf das Federscharnier 1, wobei sich das Scharnierelement 5 diesmal nicht in Eingriff mit dem Scharnierteil 11 befindet. Gleiche Teile sind mit gleichen Bezugszeichen versehen, sodass insofern auf die Beschreibung der vorangegangenen Figuren verwiesen wird.

Die Stege 9 und 9' weisen Scharnieraugen 51 und 51' auf, durch die zur Verbindung der beiden Scharnierelemente 5 und 11 das Verbindungselement 13, wie in Figur 1 gezeigt, durchführbar ist.

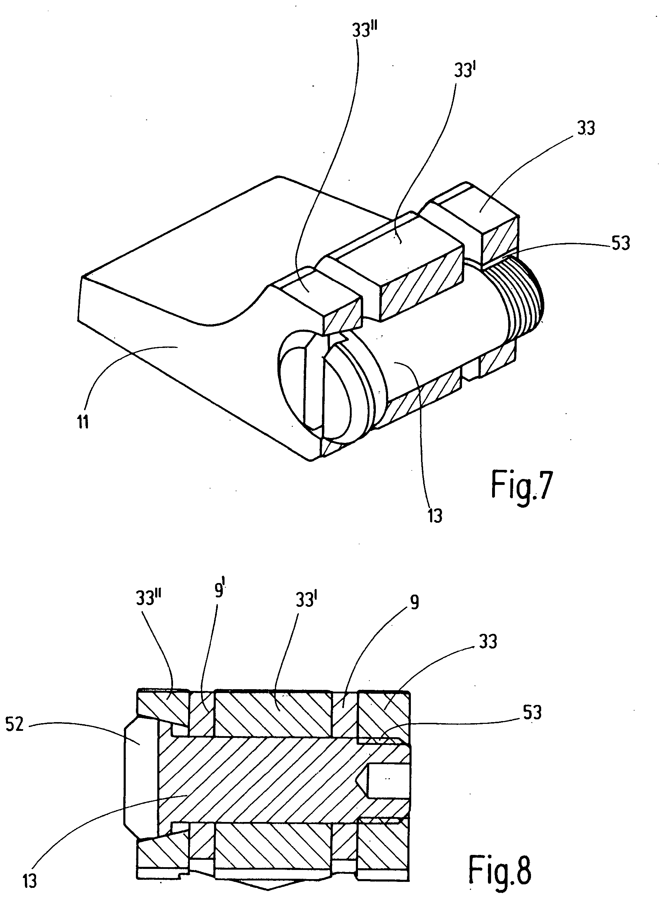

Figur 7 zeigt das drei-rollig ausgeführte Scharnierteil 11 mit seinen drei Lappen 33, 33' und 33". Deren Enden mit den Nocken sind hier abgeschnitten. Deutlich zu erkennen ist, dass das Verbindungselement 13 durch eine Ausnehmung in dem Scharnierteil 11 beziehungsweise in den Lappen geführt ist, um das Scharnierteil 11 mit dem Scharnierelement 5 zu verbinden.

Durch die Ausführung des Scharniereteils 11 mit drei Lappen, zwischen denen jeweils ein hier nicht dargestellter Steg 9, 9' des Scharnierelements 5 anordenbar ist, ist eine besonders stabile Ausführung des Federscharniers 1 gewährleistet. Ein Gesamtspiel des Scharnierteils 11 gegenüber dem Gehäuse 3 wird durch diese Ausgestaltung wesentlich reduziert.

Figur 8 zeigt einen Querschnitt durch ein mit einem Scharnierteil 11 verbundenes Scharnierelement 5. In Figur 8 ist erkennbar, dass das Verbindungselement 13 als Schraube mit einem Kopf 52 und einem Außengewinde 53 ausgebildet ist, das in den Lappen 33 eingreift.

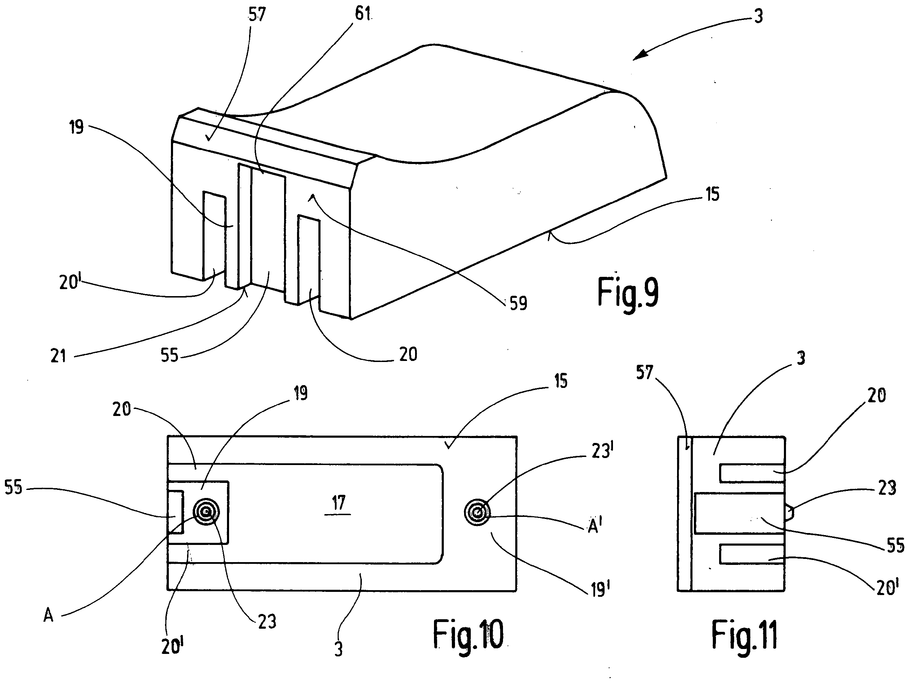

Figur 9 zeigt eine perspektivische Draufsicht auf ein Gehäuse 3 gemäß einer weiteren Ausführungsform eines Federscharniers 1. Gleiche Teile sind mit gleichen Bezugszeichen versehen, sodass insofern auf die Beschreibung zu den vorangegangenen Figuren verwiesen wird.

Im Bereich der in den Figuren 1 bis 6 dargestellten Abrollfläche 35 des Stützelements 19 ist bei der hier dargestellten Ausführungsform eine Aussparung 55 in das Stützelement 19 eingebracht worden, die zur Aufnahme eines hier nicht dargestellten Abrollelements dient, welches die Abrollfläche 35 ersetzt. Sie erstreckt sich von der Unterseite 21 des Stützelements 19 bis zu einer Fase 57. Zur Vereinfachung sind hier das Scharnierelement 5 und das Scharnierteil 11 hier nicht dargestellt.

Die Aussparung 55 kann in das Gehäuse 3 beziehungsweise in das Stützelement 19 eingefräst sein. Denkbar ist es jedoch auch, das Gehäuse 3 und das Stützelement 19 sowie die Aussparung 55 mit einem metal injection molding (MIM)-Verfahren herzustellen.

Figur 10 zeigt noch die Unterseite des Gehäuses 3 und Figur 11 eine Seitenansicht des Gehäuses 3. Deutlich zu erkennen ist die Aussparung 55, welche in die Stirnfläche 59 des Gehäuses 3, insbesondere in das Stützelement 19 eingebracht ist. Die nähere Ausgestaltung des Stützelements 19' und der Aussparungen 25 und 27 ist hier zur Vereinfachung nicht dargestellt.

Die Aussparung 55 ist gemäß Figur 10 im Querschnitt gesehen vorzugsweise trapez- oder schwalbenschwanzförmig ausgebildet, sodass ein in die Aussparung 55 eingeführtes Abrollelement nicht herausfallen kann. Ein Abrollelement, welches vorzugsweise die gleiche Querschnittsform wie die Aussparung 55 aufweist, kann auf diese Weise von der Unterseite 15 des Gehäuses 3 aus eingeführt werden, bis dieses vollständig in der Aussparung 55 angeordnet ist. Auf diese Weise wird das Abrollelement formgebunden in die Aussparung 55 eingebracht, insbesondere eingepresst.

Das in Figur 10 gezeigte Gehäuse 3 wird vorzugsweise durch ein Metal Injection Molding-Verfahren (MIM) hergestellt. Im Bereich des zweiten Stützelements 19' sind daher auch die Aussparungen 25 und 27 hier nicht vorgesehen, die durch ein spanendes Herstellungsverfahren bedingt sein können. Die Herstellung des Gehäuses 3 mit MIM ist besonders vorteilhaft, da so eine große Formvielfalt herstellbar ist. Darüber hinaus sind mit MIM komplexere Formen leichter herstellbar als mit herkömmlichen, insbesondere spanenden Verfahren.

Um die Schweißwarzen 23 und 23' können im Übrigen noch hier nicht dargestellte Nuten, beziehungsweise Ausgleichsrillen, zur Aufnahme von geschmolzenem Material vorgesehen sein, wie sie beispielsweise in den Figuren 1 und 2 erkennbar sind. In Figur 10 erfolgt die Aufnahme des geschmolzenen Materials jedoch durch Ausgleichsrillen A und A', die vorzugsweise als Kreise ausgebildet und konzentrisch zu den Schweißwarzen 23 und 23' angeordnet sind. Es können auch mehrere Ausgleichsrillen A und A' konzentrisch zu den Schweißwarzen 23 und 23' angeordnet sein, insbesondere um zu verhindern, dass das Schweißmittel in die Schlitze 20, 20' fließt und die Beweglichkeit des hier nicht gezeigten Scharnierteils 5 beeinträchtigt.

Dadurch, dass sich die Aussparung 55 nur bis zu der unteren Kante der Fase 57 erstreckt, bildet das Gehäuse 3 in diesem Bereich einen Anschlag 61 für das Abrollelement, welches somit nach der Montage des Federscharniers 3 an einem Brillenelement fest mit dem Gehäuse 3 verbunden ist.

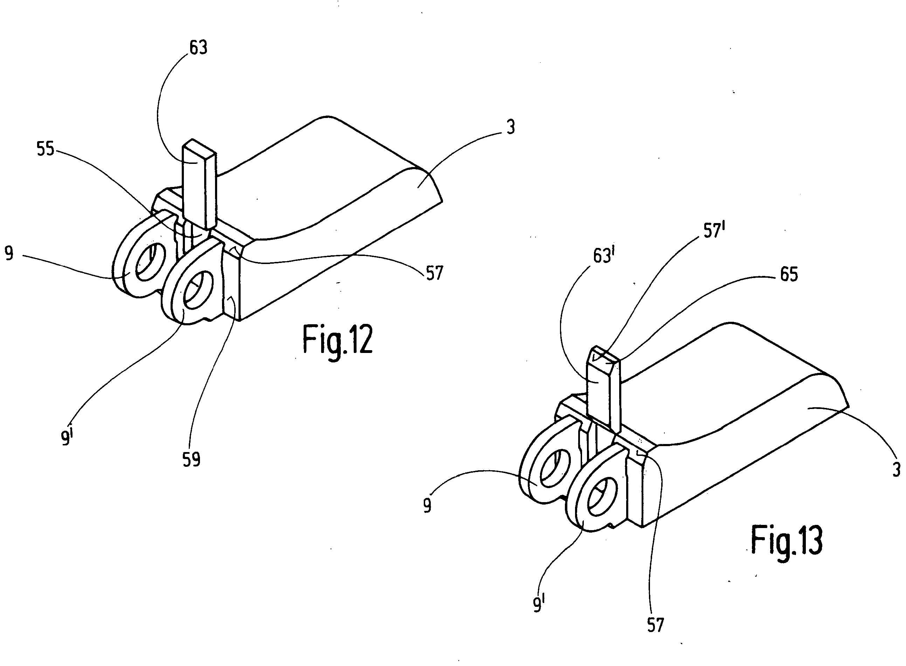

Figur 12 zeigt eine perspektivische Darstellung einer weiteren Ausführungsform eines Federscharniers 1. Gleiche Teile sind mit gleichen Bezugszeichen versehen, sodass insofern auf die Beschreibung zu den vorangegangenen Figuren verwiesen wird.

In Figur 12 ist ein Abrollelement 63 erkennbar, das noch nicht in die Aussparung 55 eingeführt wurde. Im Gegensatz zu der in den Figuren 9 bis 11 gezeigten Ausführungsform erstreckt sich hier die Aussparung 55 nicht nur bis zu der Fase 57, sondern in diese hinein. Auf diese Weise ist das Abrollelement 63 von der der Unterseite 15 gegenüberliegenden Oberseite in das Gehäuse 3 einführbar.

Figur 13 zeigt eine perspektivische Darstellung einer weiteren Ausführungsform eines Federscharniers 1, bei dem ein Abrollelement 63' vorgesehen ist, dessen oberer Bereich 65 eine Fase 57' aufweist, die der Form der Fase 57 entspricht, die insbesondere als Anlagefläche für die Stege 9 und 9' dient, wie in den Figuren 12 und 13 erkennbar ist. Auf diese Weise wird erreicht, dass das Abrollelement 63' vollkommen an die Form des Gehäuses 3 angepasst ist.

Vorzugsweise ist vorgesehen, dass das Abrollelement 63, 63' in die Aussparung 55 eingepresst wird. Auf diese Weise ergibt sich ein besonders sicherer Sitz des Abrollelements 63, 63' in der Aussparung 55. Die Klemmkraft des Abrollelements 63, 63' ist entscheidend, um ein Herausfallen des Abrollelements 63, 63' beim Transport des Federscharniers 1, bei einer chemischen Behandlung des Federscharniers 1 oder gar durch die Reibkraft beim Abrollen des Lappens 33' an dem Abrollelement 63, 63' zu vermeiden.

Das Abrollelement 63, 63' ist vorzugsweise aus einem Material mit guten Abrolleigenschaften, wie beispielsweise Neusilber oder Bronze, hergestellt, während das Gehäuse 3, beziehungsweise das Stützelement 19, vorzugsweise aus Titan oder aus Edelstahl bestehen kann.

Insgesamt zeigt sich, dass durch das Abrollelement eine Abrollfläche geschaffen wird, die vorzugsweise besonders gute Abrolleigenschaften aufweist, während das restliche Federscharnier 1, insbesondere das Gehäuse 3 und das Stützelement 19 aus einem Material hergestellt werden können, bei dem es nicht auf die Abrolleigenschaften ankommt, sondern insbesondere auf eine hohe Korrosionsbeständigkeit. Es sollte zudem vorzugsweise biokompatibel, also insbesondere hautverträglich und darüber hinaus leicht sein. Als derartiges hochwertiges Material kommt insbesondere Titan in Betracht.

Insbesondere ist dadurch die Herstellung des Federscharniers 1 in vorteilhafter Weise mit einem MIM-Verfahren möglich, wodurch eine große Formenvielfalt einfach realisierbar ist. In diesem Fall wird die in den Figuren 9 bis 11 gezeigte Variante der Aussparung 55 bevorzugt, bei der also ein Anschlag 61 in dem oberen Bereich 65 vorgesehen ist.

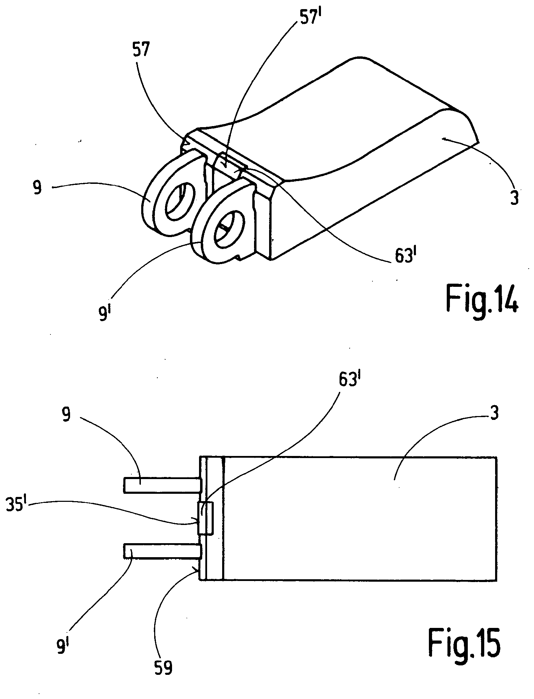

Figur 14 zeigt eine perspektivische Darstellung des Federscharniers 1 und Figur 15 zeigt eine Draufsicht auf das Federscharnier 1 gemäß Figur 14. Gleiche Teile sind mit gleichen Bezugszeichen versehen, sodass insofern auf die Beschreibung zu den vorangegangenen Figuren verwiesen wird.

In Figur 14 ist das in Figur 13 gezeigte, die Fase 57' aufweisende Abrollelement 63' vollständig in der Aussparung 55 angeordnet, vorzugsweise in diese eingepresst, sodass die Fase 57' vorzugsweise plan mit der Fase 57 des Gehäuses 3 abschließt. Denkbar ist jedoch auch, das Abrollelement 63, 63' auf andere Weise mit dem Gehäuse 3 zu verbinden, es beispielsweise anzulöten, anzuschweißen oder auch anzukleben.

In Figur 15 ist deutlich erkennbar, dass die Abrollfläche 35' des Abrollelements 63' nicht plan mit der Stirnfläche 59 des Gehäuses 3 abschließt, sondern etwas über diese hervor steht. Auf diese Weise erfolgt ein Abrollen des Lappens 33' des Scharnierteils 11 ausschließlich an der Abrollfläche 35', sodass die Stirnfläche 59 des Gehäuses 3 nicht berührt wird. Dadurch werden Kratzspuren oder Lackabtragungen durch das Öffnen und Schließen des Federscharniers 1 im Bereich der Stirnfläche 59 vermieden. Ein Verschleiß, insbesondere eine Farbabtragung oder dergleichen findet somit ausschließlich in einem Bereich statt, der von außen nicht sichtbar ist, nämlich auf der Abrollfläche 35'. Zudem werden die Abrolleigenschaften des Federscharniers 1 nicht durch das Abrollen der Lappen 33 und 33' im Bereich der Stirnfläche 59 beeinträchtigt.

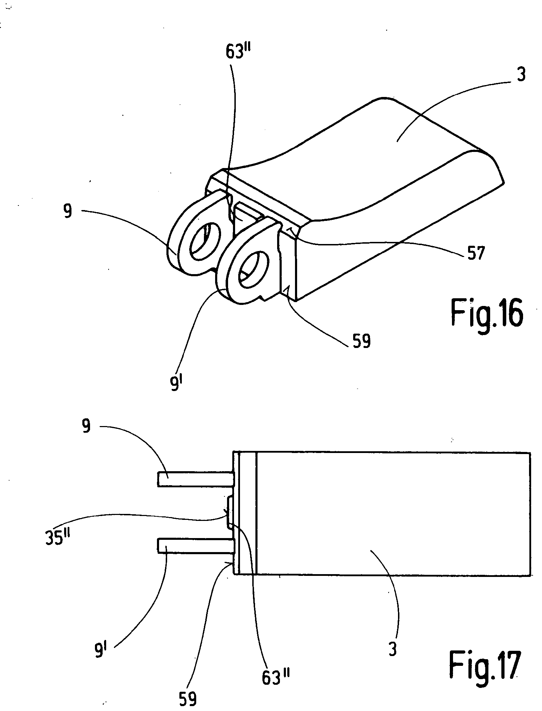

Figur 16 zeigt eine perspektivische Ansicht einer weiteren Ausführungsform des Federscharniers 1 und Figur 17 zeigt eine Draufsicht auf das Federscharnier 1 gemäß Figur 16. Gleiche Teile sind mit gleichen Bezugszeichen versehen, sodass insofern auf die Beschreibung zu den vorangegangenen Figuren verwiesen wird.

Figur 16 zeigt eine Ausführungsform des Federscharniers 1, bei dem keine Aussparung 55 in das Stützelement 19 eingebracht wurde. Stattdessen ist ein vorzugsweise quaderförmiges Abrollelement 63" vorgesehen, welches auf die Stirnfläche 59 im Bereich des Stützelements 19 aufgesetzt ist. Insbesondere kann vorgesehen sein, das Abrollelement 63" aufzukleben, anzuheften, anzulasern, anzuschweißen oder mit sonstigen Verfahren an dem Stützelement 19 zu befestigen.

Es ist in Figur 17 deutlich erkennbar, dass auch bei dieser Ausführungsform die Abrollfläche 35" des Abrollelements 63" über der Stirnfläche 59 hervorsteht, sodass bei einer Öffnungs- oder Schließbewegung des Federscharniers 1 ausschließlich ein Abrollen des hier nicht dargestellten Lappens 33' an der Abrollfläche 35" statt findet.

Bei den oben aufgezeigten Ausführungsformen eines Abrollelements 63, 63' und 63" kann eine Befestigung, insbesondere eine zusätzliche Befestigung an dem Stützelement 19 dadurch realisiert werden, dass beim Elektroschweißen des Federscharniers 1 zum Verbinden mit einem Brillenelement, flüssiges Material der Schweißwarze in den Bereich zwischen Stützelement 19 und Abrollelement 63, 63', 63" fließt. Hierzu können die im Bereich der Schweißwarze 23 vorzugsweise vorgesehenen Nuten 41 und 41' entsprechend zielführend in die Unterseite 21 des Stützelements 19 eingebracht sein, sodass das geschmolzene Material in den Bereich des Abrollelements 63, 63', 63" geleitet wird.

Das hier vorgeschlagene elektroschweißbare Federscharnier 1 für Brillen zeichnet sich also einerseits dadurch aus, dass durch die zentrische, in dem Hohlraum 17 freistehende Anordnung des Stützelements 19 eine thermische Entkopplung gegenüber dem übrigen Gehäuse 3 realisiert wird, und dass Anpressdrücke während des Elektroschweißens, welche auf das Federscharnier 1 wirken, durch das Stützelement 19 wirksam abgefangen werden und Verformungen Verlagerungen von Material des Gehäuses 3 somit praktisch ausgeschlossen sind.

Andererseits ist es durch die auf der Unterseite 21 des Stützelements 19 vorgesehene Schweißwarze 23 möglich, den Schweißstrom direkt im Bereich der Stützelemente 19, 19' in das vormontierte Federscharnier 1 einzubringen, sodass eine gezielte Führung des Schweißstroms erfolgen kann, ohne dass andere Elemente des Federscharniers 1 belastet und zu sehr erwärmt werden.

Auch ist durchaus denkbar, wenigstens zwei Stützelemente 19' beispielsweise nebeneinander vorzusehen, die jeweils eine Schweißwarze 23' aufweisen können.

Das Stützelement 19, 19' kann im Übrigen einstückig mit dem Gehäuse 3 ausgebildet werden. Durch diese Ausgestaltung wird der Einsatz eines separaten Verschlusselements überflüssig. Das Stützelement 19 dient außerdem als Widerlager für das Federelement 7 und als Abrollfläche 35 für den Nocken 34' eines mit dem Scharnierelement 5 in Verbindung stehenden Scharnierteils 11. Die seitlichen Führungsflächen 47 des Stützelements 19 können dazu genutzt werden, das Scharnierelement 5 relativ zu dem Gehäuse 3 zu führen, wenn ein Brillenelement über seine Trageposition hinausbewegt wird.

Dadurch, dass das Federscharnier 1 lediglich drei Bauteile umfasst, nämlich das Gehäuse 3, das Scharnierelement 5 sowie das Federelement 7, ist eine besonders einfache Montage des Federscharniers 1 vor dem Elektroverschweißen mit einem Brillenelement möglich. Das Federscharnier 1 ist damit als kompakte vormontierte Baugruppe direkt auf einem Brillenelement aufschweißbar. Ein hier vorgeschlagenes Federscharnier 1 ist daher auch besonders kostengünstig realisierbar und ist insbesondere auch für breite Brillenbügel geeignet.

Die U-förmige Ausgestaltung des in dem Gehäuse 3 untergebrachten Scharnierteils 5 und die daran vorgesehenen Stege 9, 9' ermöglichen eine besonders stabile Befestigung, insbesondere an einem drei-rolligen Scharnierteil 11, sodass das Gesamtspiel des Federscharniers 1 minimiert wird.

## Patentansprüche

1. Elektroschweißbares Federscharnier (1) für Brillen, mit einem auf einer Unterseite (15) offenen Gehäuse (3), welches einen Hohlraum (17) aufweist, in den ein Federelement (7) einbringbar ist und in dem wenigstens ein Stützelement (19) vorgesehen ist, und mit einem Scharnierelement (5), welches in dem Gehäuse (3) verschieblich gelagert ist, wobei auf der einem Brillenelement zugewandten Unterseite (21) des Stützelements (19) mindestens eine Schweißwarze (23) zum Elektroverschweißen des Gehäuses (3) mit dem Brillenelement vorgesehen ist, wobei das Stützelement (19) als Widerlager für das Federelement (7) dient, **dadurch gekennzeichnet, dass**
- das wenigstens eine Stützelement (19) im Wesentlichen zentrisch im Bereich eines offenen Stirnseitenabschnitts (S) des Gehäuses (3) angeordnet ist und ausgehend von einer Bodenfläche (B) des Gehäuses (3) freistehend in den Hohlraum (17) hinein ragt, und dass
- im Bereich des offenen Stirnseitenabschnitts (S) des Federscharniers (1) ein Abrollelement (63, 63', 63") vorgesehen ist, welches mit dem Stützelement (19) verbindbar ist.

2. Federscharnier nach Anspruch 1, **dadurch gekennzeichnet, dass** das Stützelement (19) einstückig mit dem Gehäuse (3) ausgebildet ist.

3. Federscharnier nach Anspruch 1 oder 2, **dadurch gekennzeichnet, dass** das Stützelement (19) als Verschlussteil für das Gehäuse (3) dient.

4. Federscharnier nach einem der vorhergehenden Ansprüche, **dadurch gekennzeichnet, dass** die Unterseite (21) des Stützelements (19) im Wesentlichen bündig mit der Unterseite (15) des Gehäuses (3) abschließt.

5. Federscharnier nach einem der vorhergehenden Ansprüche, **dadurch gekennzeichnet, dass** wenigstens ein weiteres mindestens eine Schweißwarze (23') aufweisendes Stützelement (19') vorgesehen ist.

6. Federscharnier nach Anspruch 5, **dadurch gekennzeichnet, dass** das weitere Stützelement (19') einstückig mit dem Gehäuse (3) ausgebildet ist.

7. Federscharnier nach einem der vorhergehenden Ansprüche, **dadurch gekennzeichnet, dass** zwischen dem Gehäuse (3) und dem Stützelement (19) auf beiden Seiten einer Mittelebene (E) des Federscharniers (1) jeweils ein Schlitz (20, 20') vorgesehen ist, in denen das Scharnierelement (5) anordenbar ist.

8. Federscharnier nach einem der vorhergehenden Ansprüche, **dadurch gekennzeichnet, dass** das Stützelement (19) Führungsflächen (47) aufweist, die zur Führung des Scharnierelements (5) in dem Gehäuse (3) dienen.

9. Federscharnier nach einem der vorhergehenden Ansprüche, **dadurch gekennzeichnet, dass** das Scharnierelement (5) zwei je ein Scharnierauge (51,51') aufweisende Stege (9,9') umfasst.

10. Federscharnier nach Anspruch 9, **dadurch gekennzeichnet, dass** das Scharnierelement (5) über die zwei Stege (9,9') und über ein Verbindungselement (13) mit einem drei-rolligen Scharnierteil (11) in Verbindung steht.

11. Federscharnier nach einem der vorhergehenden Ansprüche, **dadurch gekennzeichnet, dass** das Abrollelement (63, 63', 63") aus einem Material mit guten Abrolleigenschaften besteht.

12. Federscharnier nach einem der vorhergehenden Ansprüche, **dadurch gekennzeichnet, dass** das Abrollelement (63, 63', 63") über die Stirnfläche (59) des Gehäuses (3) hervorsteht.

13. Federscharnier nach einem der vorhergehenden Ansprüche, **dadurch gekennzeichnet, dass** das Abrollelement (63, 63') in einer in dem Stützelement (19) vorgesehenen Aussparung (55) anordenbar ist, die vorzugsweise eine Schwalbenschwanzgeometrie aufweist.

14. Federscharnier nach einem der Ansprüche 1 bis 12, **dadurch gekennzeichnet, dass** das Abrollelement (63,63',63") auf das Stützelement (19) geklebt oder an dieses angeheftet, angelasert oder angeschweißt ist.

15. Federscharnier nach einem der vorhergehenden Ansprüche, **dadurch gekennzeichnet, dass** das Scharnierelement (5) als Stanzteil ausgeführt ist, welches in eine U-Form gebogen ist.

16. Federscharnier nach einem der vorhergehenden Ansprüche, **dadurch gekennzeichnet, dass** das Scharnierelement (5) aus einem Material konstanter Dicke ausgebildet ist und/oder eine hohe Festigkeit aufweist und/oder rostfrei ausgeführt ist.

## Claims

1. An electrically weldable spring hinge (1) for spectacles, comprising a housing (3), which is open on an underside (15) and which has a cavity (17), into which a spring element (7) can be introduced and in which at least one support element (19) is provided, and comprising a hinge element (5), which is supported in a displaceable manner in the housing (3), wherein at least one welding stud (23) for electrically welding the housing (3) to a spectacles element is provided on the underside (21) of the support element (19), which faces the spectacles element, wherein the support element (19) serves as abutment for the spring element (7), **characterized in that**
- the at least one support element (19) is arranged essentially centrically in the region of an open end face portion (S) of the housing (3) and originating at a bottom face (B) of the housing (3) protrudes into the cavity (17) in a freestanding manner, and that
- a roll-off element (63, 63', 63"), which can be connected to the support element (19), is provided in the region of the open end face portion (S) of the spring hinge (1).

2. The spring hinge according to claim 1, **characterized in that** the support element (19) and the housing (3) are configured in one piece.

3. The spring hinge according to claim 1 or 2, **characterized in that** the support element (19) serves as closure part for the housing (3).

4. The spring hinge according to any one of the preceding claims, **characterized in that** the underside (21) of the support element (19) essentially lines up precisely with the underside (15) of the housing (3).

5. The spring hinge according to any one of the preceding claims, **characterized in that** at least one further support element (19') is provided, which has at least one welding stud (23').

6. The spring hinge according to claim 5, **characterized in that** the further support element (19') and the housing (3) are configured in one piece.

7. The spring hinge according to any one of the preceding claims, **characterized in that** a slit (20, 20'), in which the hinge element (5) can be arranged, is in each case provided between the housing (3) and the support element (19) on both sides of a center plane (E) of the spring hinge (1).

8. The spring hinge according to any one of the preceding claims, **characterized in that** the support element (19) has guide faces (47), which serve to guide the hinge element (5) in the housing (3).

9. The spring hinge according to any one of the preceding claims, **characterized in that** the hinge element (5) comprises two webs (9, 9'), which each have a hinge eye (51, 51').

10. The spring hinge according to claim 9, **characterized in that** the hinge element (5) is in contact with a hinge part (11), which has three rollers, via the two webs (9, 9') and via a connecting element (13).

11. The spring hinge according to any one of the preceding claims, **characterized in that** the roll-off element (63, 63', 63") consists of a material with good roll-off properties.

12. The spring hinge according to any one of the preceding claims, **characterized in that** the roll-off element (63, 63', 63") protrudes beyond the end face (59) of the housing (3).

13. The spring hinge according to any one of the preceding claims, **characterized in that** the roll-off element (63, 63') can be arranged in a recess (55), which is provided in the support element (19) and which preferably has a dovetail geometry.

14. The spring hinge according to any one of claims 1 to 12, **characterized in that** the roll-off element (63, 63', 63") is adhered to the support element (19) or is stapled, lasered, or welded thereto.

15. The spring hinge according to any one of the preceding claims, **characterized in that** the hinge element (5) is embodied as stamped part, which is bent into a U shape.

16. The spring hinge according to any one of the preceding claims, **characterized in that** the hinge element (5) is made of a material with a constant thickness and/or has a high strength and/or is embodied to be stainless.

## Revendications

1. Charnière à ressort (1) électrosoudable pour lunettes, présentant un logement (3) ouvert sur une face inférieure (15), lequel présente une cavité (17) dans laquelle un élément à ressort (7) peut être introduit et dans laquelle au moins un élément de support (19) est prévu, et un élément formant charnière (5) coulissant dans le logement (3), au moins un bossage de soudure (23) pour l'électrosoudage du logement (3) avec l'élément de lunette étant prévu sur la face inférieure (21) de l'élément de support (19), tournée vers un élément de lunette, l'élément de support (19) faisant office de butée pour l'élément à ressort (7), **caractérisée en ce que**
- au moins un élément de support (19) est essentiellement disposé au centre dans la zone d'une partie d'extrémité frontale (S) ouverte du logement (3) et dépasse en pose libre dans la cavité (17) en partant d'une surface du fond (B) du logement (3) et **en ce que**
- un élément de roulement (63, 63', 63") pouvant être relié à l'élément de support (19), est prévu dans la zone de la partie d'extrémité frontale (S) ouverte de la charnière à ressort (1).

2. Charnière à ressort conformément à la revendication 1, **caractérisée en ce que** l'élément de support (19) est conçu en une pièce avec le logement (3).

3. Charnière à ressort conformément à la revendication 1 ou 2, **caractérisée en ce que** l'élément de support (19) fait office de pièce de fermeture pour le logement (3).

4. Charnière à ressort conformément à l'une des revendications précédentes, **caractérisée en ce que** la face inférieure (21) de l'élément de support (19) se termine essentiellement au même niveau que la face inférieure (15) du logement (3).

5. Charnière à ressort conformément à l'une des revendications précédentes, **caractérisée en ce qu'**au moins un autre élément de support (19') présentant au moins un bossage de soudure (23') est prévu.

6. Charnière à ressort conformément à la revendication 5, **caractérisée en ce que** l'autre élément de support (19') est conçu en une pièce avec le logement (3).

7. Charnière à ressort conformément à l'une des revendications précédentes, **caractérisée en ce qu'**une fente (20, 20') dans laquelle l'élément formant charnière (5) peut être disposé, est prévue entre le logement (3) et l'élément de support (19) des deux côtés d'un niveau central (E) de la charnière à ressort (1).

8. Charnière à ressort conformément à l'une des revendications précédentes, **caractérisée en ce que** l'élément de support (19) présente des surfaces de guidage (47) qui permettent le guidage de l'élément formant charnière (5) dans le logement (3).

9. Charnière à ressort conformément à l'une des revendications précédentes, **caractérisée en ce que** l'élément formant charnière (5) comprend deux entretoises (9, 9') présentant chacune un œillet de charnière (51, 51').

10. Charnière à ressort conformément à la revendication 9, **caractérisée en ce que** l'élément formant charnière (5) est en liaison avec une partie formant charnière (11) à trois roulements par les deux entretoises (9, 9') et par un élément de liaison (13).

11. Charnière à ressort conformément à l'une des revendications précédentes, **caractérisée en ce que** l'élément de roulement (63, 63', 63") se compose d'un matériau présentant de bonnes propriétés de roulement.

12. Charnière à ressort conformément à l'une des revendications précédentes, **caractérisée en ce que** l'élément de roulement (63, 63', 63") est en saillie par rapport à la surface frontale (59) du logement (3).

13. Charnière à ressort conformément à l'une des revendications précédentes, **caractérisée en ce que** l'élément de roulement (63, 63') peut être disposé dans un évidement (55) prévu dans l'élément de support (19), lequel présente préférablement une géométrie à queue d'aronde.

14. Charnière à ressort conformément à l'une des revendications 1 à 12, **caractérisée en ce que** l'élément de roulement (63, 63', 63") est collé sur l'élément de support (19) ou bien fixé, traité au laser ou soudé sur ce dernier.

15. Charnière à ressort conformément à l'une des revendications précédentes, **caractérisée en ce que** l'élément formant charnière (5) est conçu comme pièce découpée, laquelle est courbée en U.

16. Charnière à ressort conformément à l'une des revendications précédentes, **caractérisée en ce que** l'élément formant charnière (5) est constitué d'un matériau d'épaisseur constante et/ou présente une solidité élevée et/ou est inoxydable.
